# EUROPEAN PATENT SPECIFICATION

(11) **EP 0 706 165 B1**
(45) Date of publication and mention of the grant of the patent: **28.11.2001**
(21) Application number: 95115269.3
(22) Date of filing: 27.09.1995
(51) Int. Cl.: G09G 3/34, G02B 26/08

(54) **Error diffusion filter for use in a DMD display**
Filter zur Fehlerdiffusion für DMD zur Anwendung in einem Anzeigesystem
Filtre pour la diffusion d'erreur de DMD pour l'utilisation dans un systéme d'affichage

(30) Priority: 30.09.1994 US 315744
(43) Date of publication of application: 10.04.1996
(73) Proprietor: TEXAS INSTRUMENTS INCORPORATED, Dallas Texas 75265 (US)
(72) Inventor: Markandey, Vishal, Dallas, TX 75209 (US); Pettitt, Gregory S., Rowlett, TX 75088 (US)
(74) Representative: Schwepfinger, Karl-Heinz, Dipl.-Ing.

(56) References cited:
- EP-A- 0 520 481
- EP-A- 0 545 412
- WO-A-92/09064
- US-A- 5 289 172

## Description

### Technical Field of the Invention

This invention relates to digital imaging and more particularly to an error diffusion filter for a digital micromirror device (DMD) display of the type defined in the precharacterizing portion of claim 1.

### Background of the Invention

A new projection display that utilizes reflections from hundreds of thousands of micromirrors, each mounted above its own semiconductor memory cell is described in IEEE Spectrum, November 1993, vol. 30, no. 11, written by Jack M. Younse of Texas Instruments Incorporated. The digital micromirror device (DMD) comprises a special light modulator that was invented in 1987 by Larry J. Hornbeck, a Texas Instruments Incorporated scientist. The DMD, or digital micromirror device, covers each memory cell of a CMOS static RAM with a movable micromirror. Electrostatic forces based on the data in this cell tilt the mirror either plus or minus 10 degrees, modulating the light incident on the surface. The light reflected from any of the mirrors passes through a projection lens and creates an image on a large screen. Light from the remaining off mirrors is reflected away from the projection lens and trapped. The portion of the time during each video frame that the mirror remains in the on state determines the shades of grey- from black for zero on time to white for 100 percent on time. Color may be added in two ways, by a color wheel or a 3-DMD set up.

Some DMD devices may have the capability to display only a low number of bits representing the on and off times and, therefore, the shades of grey or shades of color, leading to degradation of the video quality. Also, the use of digital degamma in the DMD display systems entails some loss of resolution (blockiness) in the low intensity regions. Finally, even the best of DMDs can have some defects (pixels stuck on, off, or flat). It is desirable to find some method to provide a correction for these display errors and to provide a more pleasing picture without significantly increasing the time for processing by increasing the number of bits for each on or off time.

An error diffusion filter of the type defined in the precharacterizing portion of claim 1 is known from WO-A-9209064. Using that error diffusion filter, bits having a duration of less than the shortest displayable duration can be displayed by adjusting the turn-on time of a proportion of the adjacent mirrors.

From US-A-5 289 172 a method of mitigating the effects of a bright defective electromechanical pixel which transmits light into an observer's field of view is known. That method comprises the step of applying a voltage sufficient to damage the electromechanical pixel, which has a beam and a hinge, in such a manner that the pixel no longer transmits light into the observer's field of view.

### Summary of the Invention

According to one aspect of the present invention there is provided an error diffusion filter for a DMD display of the type defined in the precharacterizing portion of claim 1 and comprising the features of the characterizing portion of claim 1.

According to a further aspect of the present invention there is provided a method of filtering a DMD display comprising the steps defined in claim 7.

According to a still further aspect of the present invention there is provided method of correcting for defective pixel elements in a DMD display comprising the steps defined in claim 8.

In accordance with the present invention the problem of low number of bits, blockiness due to degamma and DMD defects is alleviated by an improved diffusion filter. The improved filter includes both an inverse gamma look-up table and an error look-up table that is responsive to the video data for providing an error value that is distributed to neighboring pixel elements.

### Description of the Drawings

Reference will now be made, by way of example, in which:
Fig. 1 is an overall block diagram of a Digital Micromirror Display System;
Fig. 2 is a sketch of a micromirror element in Fig. 1;
Fig. 3 is a timing diagram illustrating the on-time of MSB and LSB;
Fig. 4 is a plot of CRT response, gamma transmission sent, and inverse gamma;
Fig. 4a is a plot in more detail of the inverse degamma of Fig. 4;
Fig. 5 illustrates the stepped DMD response with LUT;
Fig. 6 is a sketch of an error diffusion filter according to one embodiment of the present invention; and
Fig. 7 illustrates the operation of the filter of Fig. 6.

### Description of Preferred Embodiments of the Present Invention

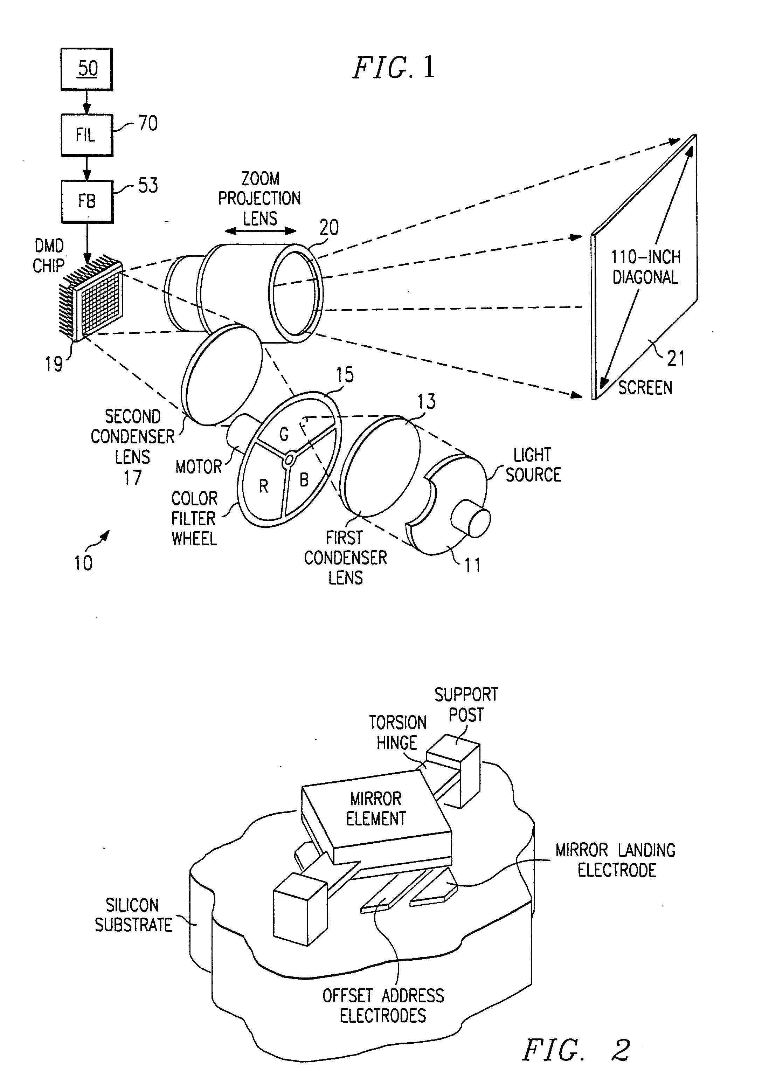

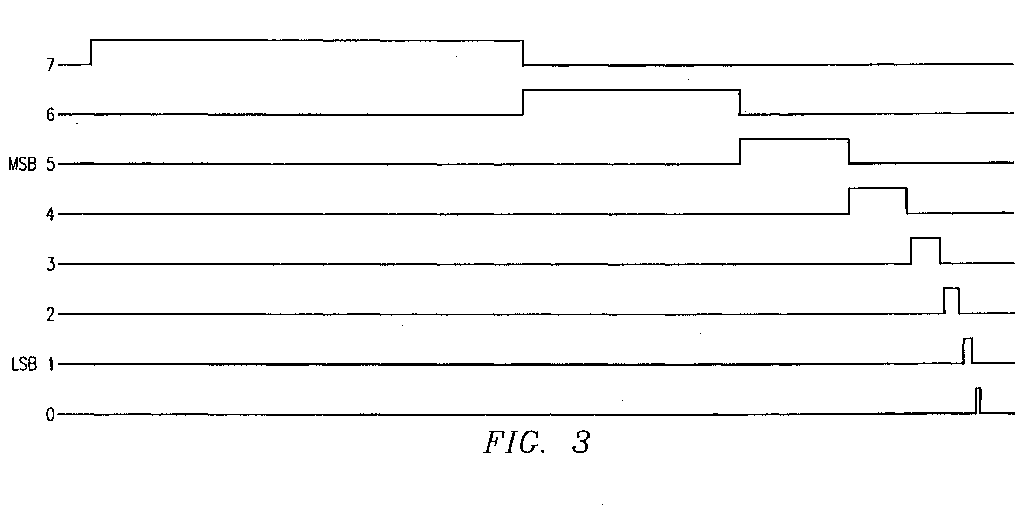

Referring to Fig. 1, there is illustrated an overall block diagram of a digital micromirror device (DMD) display system. Referring to Fig. 1, an example of a DMD system 10 is illustrated, wherein the light from a light source 11 is applied through a first condenser lens 13 and through a color wheel 15, which is rotating at about sixty cycles, or hertz, or 60 frames per second. The light passing through the color wheel 15 passes through a second condenser lens 17 onto a DMD chip 19. The DMD chip includes an array of tiny mirror elements, or micromirrors, where each mirror element is hinged by a torsion hinge and support post above a memory cell of a CMOS static RAM as shown in Fig. 2. The movable micromirror tilts into the on or off states by electrostatic forces based on data in the cell. The tilt of the mirror is either plus 10 degrees (on) or minus 10 degrees (off) to modulate the light that is incident on the surface. For additional details, see U.S. Patent No. 5,061,049 entitled, "Spatial Light Modulator" and U.S. Patent No. 5,280,277 entitled, "Field Updated Deferrable Mirror Device," both by Larry J. Hornbeck. As shown, the light reflected from any of the mirrors may pass through a projection lens 20 and create images on a large screen 21. As stated previously, the portion of time during which the video frame that a mirror remains in the on state determines the shade of grey. The time duration in which the cell is in the positive direction, or on, is represented by 8 bits of data sent to that cell. The color wheel 15 is divided into red, green, and blue sectors. In the color wheel example, the maximum red would be when the red, for example, would be reflecting the maximum period of time as when the light is on the longest period of time in the red sector. Applicants' invention can also be used in DMD display systems that use three DMD displays in place of a color wheel. The same would go for the other two colors. The minimum would be where the micromirror would not be reflecting through the color wheel and the lens, etc. at all during the color cycle. The intensity resolution in this pulse width modulation (PWM) is limited by the response time of the DMD mirrors. The total time available to display a color frame and the least time required to turn a mirror to the "on" state and back to "off" state defines the resolution of present systems. In the arrangement for the 8 bits, the most significant bit, as illustrated in Fig. 3, is the 7th bit with that bit representing the widest "on" time, the 6th bit being then the next widest "on" time, and the 5th bit representing the third longest "on" time, etc., all the way down to the least significant 0 bit, which is represented by the shortest time period. For example, a sequential color DMD system might have 5 (five) msec (milliseconds) available for a color frame. For 8-bit binary PWM, the least significant bit (0 bit on only), the shortest period would be "on" for about 19.6 microseconds. The mirror on/off time would have to be less than 19.6 msec to implement this scheme with the current method. In a system where the DMD device has the capability of only 6 bits, or even those that have the full eight bits, the system would have too few number of grades of grey or shades of color and, therefore, tend to show blockiness between portions of the picture. This would represent one of the errors that the present invention is to overcome.

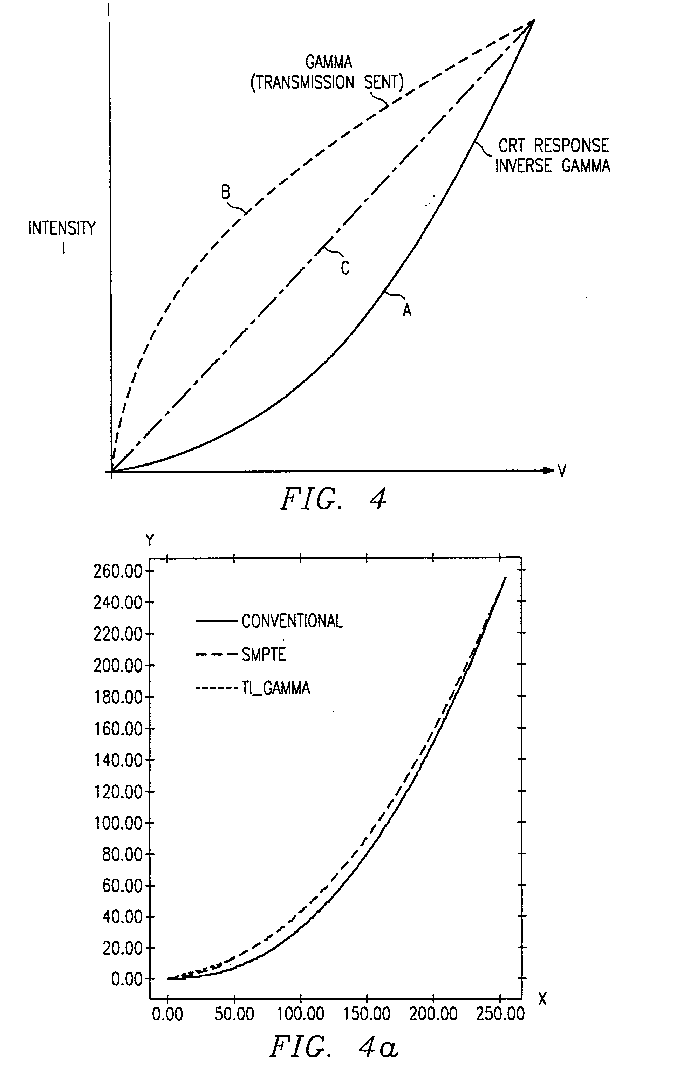

Another error is due to the degamma effect in the display. On a typical CRT television display system, the intensity of the picture is a function of the voltage, which is represented by the CRT response in Curve A of the sketch in Fig. 4. Note that the intensity for the lower voltage is nearly flat in the low voltage region, but increases rapidly at middle to highest voltage inputs. In order to correct for this, the transmission that is sent to the display has a gamma characteristic of curve B so that the overall response is linear as represented by the linear solid line C. In order to duplicate the CRT response for the digital micromirror device, a digital degamma characteristic is made to follow curve A of Fig. 4. Fig. 4a is a plot in more detail of Curve A of Fig. 4 for conventional inverse degamma, SMPTE inverse degamma, and Texas Instruments' degamma. A plot of conventional degamma input and output values follows Table 1 in Appendix A. There may be different gamma for red, green and blue, and, therefore, different degamma output tables for red, green and blue.

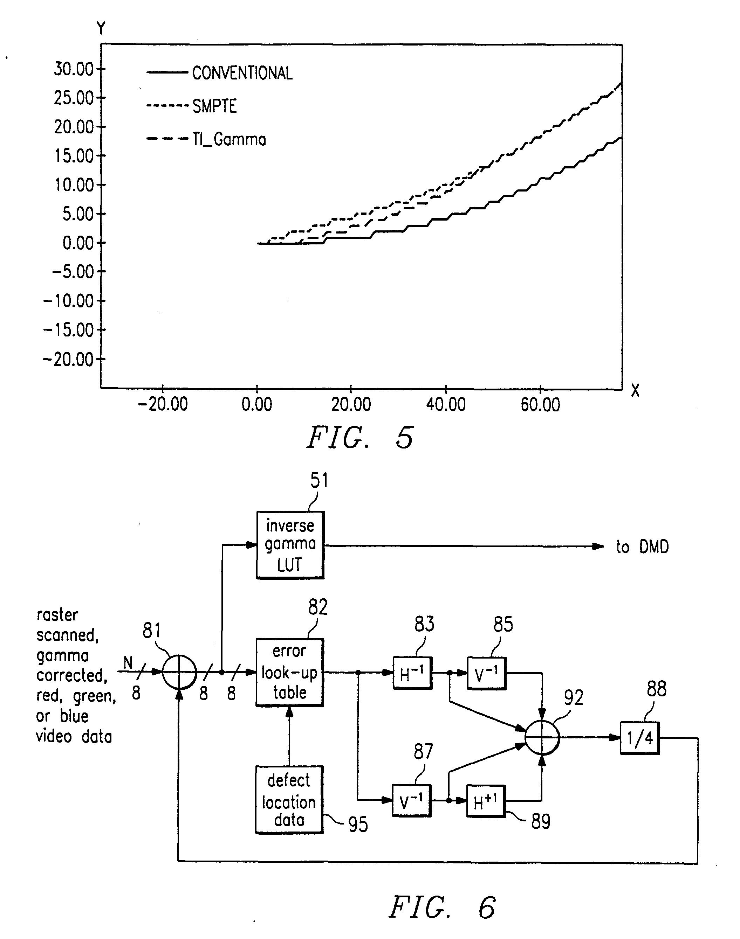

This degamma correction is done, for example, for each color by providing the raster scanned gamma corrected red, green, or blue video data as shown in Fig. 1 to a separate degamma look-up table (LUT) 50 where for given input threshold levels the mirrors are turned on for given durations. However, due to the micromirror being digital in nature, the output is stepped as shown in Fig. 5 rather than smooth between the thresholds of the bits and, therefore, the grade levels again take on a blockiness particularly in the low intensity regions.

In accordance with the present invention, Applicants solve the problems of the low number of bits and blockiness due to degamma, and defective DMDs by an error diffusion filter, as shown in Fig. 6 (FIL in Fig. 1), for each color path (red, green, and blue) on the raster scanned video output that would normally be written into the frame RAM buffer 53. For each input intensity, an output intensity N will be displayed on the DMD device. If the degamma was perfect and there was no lack of bits, the value displayed on the DMD would be some other value N1. We compute the difference between N and N1 and distribute this difference (error) among the neighboring pixels. The error can be distributed among the neighbors in various ways. One implementation is shown in Fig. 6.

Temporal error diffusion can be a post processing step in this algorithm to improve frame to frame visual response and is being investigated.

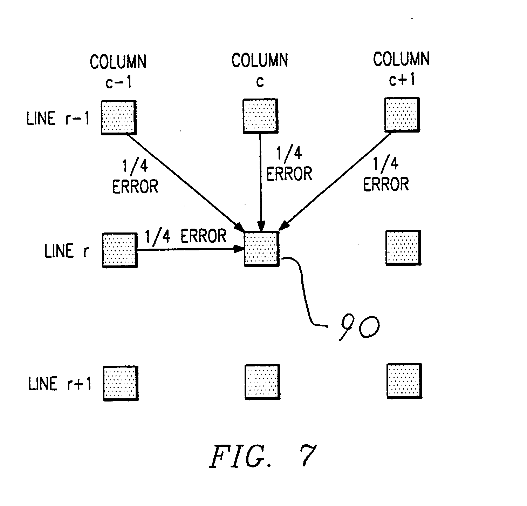

In accordance with one embodiment of the present invention, there is illustrated error diffusion filter according to one embodiment of the present invention. Referring to Fig. 6, the difference between N and N1 is distributed among its neighboring pixels as illustrated in Fig. 7. The implementation is illustrated in Fig. 6 wherein the raster scan gamma corrected red, green, or blue video 8-bit pixel intensity level data is applied, for example, via summer device 81 to both an error look-up table 82 and inverse gamma look-up (LUT) 51. For a gamma corrected video sent that follows Curve B, a perfect inverse gamma is known and follows Curve A. Table 2 in Appendix A for a 8-bit display shows for a given input value (IN) the value N provided by LUT 51 is in column marked "OUT" and is applied to corresponding DMD device. The error or difference value from the ideal N1 is N - N1 and is taken from the error look-up table (LUT) 82 and for an 8-bit display the value is marked as "ERROR" in Table 2. For example, if the input data value is 38, the output value from LUT 51 is 8 and the error value from Error LUT Table 82 is 1. This error is distributed for example as indicated in Fig. 7. The value of pixel 90 has one-quarter of the error from the previous horizontal line r-1 and previous column c-1 via H-1 delay 83 and V-1 delay 85, respectively, divider 88 and summer 92. The value at Pixel 90 has one-quarter of the error from the previous picture element in the column C-1 and this value is applied to summer 81 via H-1 delay 83, divider 88 and summer 92. Another one-quarter of the error from the previous line and same column is provided over V-1 delay 87 and divider 88. Another quarter of the error from the previous horizontal line R-1 and the next or C+1 column is applied via V-1 delay 87, H+1 delay 89 and divider 88. The H-1 delay is for one pixel delay, the V-1 delay is one line delay and the H+1 delay would reduce the V-1 delay by one pixel delay. This could be done by a separate FIFO delay by parsing V-1 delay 87. In this manner, the error added at summer 81 enhances the apparent intensity resolution of the video display system at the adjacent pixels.

If the DMD is a 7-bit display, the Tables 51 and 82 provide the values of Table 3 of Appendix A.

A further advantage of the present invention is that the defect compensation can be performed as part of this algorithm. In accordance with the teaching herein, a defective pixel is corrected for by treating this as an error. For this, the DMD coordinates of defective pixels at source 95 is provided to look-up table 82 and the error diffusion needs to be modified to account for the fact that at those locations the pixel displays either bright (stuck ON), dark (stuck OFF), or neutral (flat pixel). The surrounding pixels to the defective pixels are modified in intensity to correct for the failed position of the micromirrors. The look-up table LUT 82 stores error values for these defective locations based on the type of error and the neighboring pixels are modified at summer 81. The error is distributed as discussed previously, such as the distribution as in Fig. 7 by the delays and summer 92 and divider of Fig. 6.

### Other Embodiments

Although the present invention and its advantages have been described in detail, it should be understood that various changes, substitutions and alterations can be made herein without departing from the scope of the invention as defined by the appended claims.

### APPENDIX A

**Table 1**

| **Inverse Degamma Values (Conventional)** | | | | | |
|---|---|---|---|---|---|
| **IN** | **OUT** | **IN** | **OUT** | **IN** | **OUT** |
| 0 | 0 | 43 | 5 | 85 | 23 |
| 1 | 0 | 44 | 5 | 86 | 23 |
| 2 | 0 | 45 | 6 | 87 | 24 |
| 3 | 0 | 46 | 6 | 88 | 25 |
| 4 | 0 | 47 | 6 | 89 | 25 |
| 5 | 0 | 48 | 6 | 90 | 26 |
| 6 | 0 | 49 | 7 | 91 | 26 |
| 7 | 0 | 50 | 7 | 92 | 27 |
| 8 | 0 | 51 | 7 | 93 | 28 |
| 9 | 0 | 52 | 8 | 94 | 28 |
| 10 | 0 | 53 | 8 | 95 | 29 |
| 11 | 0 | 54 | 8 | 96 | 30 |
| 12 | 0 | 55 | 9 | 97 | 30 |
| 13 | 0 | 56 | 9 | 98 | 31 |
| 14 | 0 | 57 | 9 | 99 | 32 |
| 15 | 1 | 58 | 10 | 100 | 33 |
| 16 | 1 | 59 | 10 | 101 | 33 |
| 17 | 1 | 60 | 11 | 102 | 34 |
| 18 | 1 | 61 | 11 | 103 | 35 |
| 19 | 1 | 62 | 11 | 104 | 35 |
| 20 | 1 | 63 | 12 | 105 | 36 |
| 21 | 1 | 64 | 12 | 106 | 37 |
| 22 | 1 | 65 | 13 | 107 | 38 |
| 23 | 1 | 66 | 13 | 108 | 39 |
| 24 | 1 | 67 | 13 | 109 | 39 |
| 25 | 2 | 68 | 14 | 110 | 40 |
| 26 | 2 | 69 | 14 | 111 | 41 |
| 27 | 2 | 70 | 15 | 112 | 42 |
| 28 | 2 | 71 | 15 | 113 | 43 |
| 30 | 2 | 72 | 16 | 114 | 43 |
| 31 | 2 | 73 | 16 | 115 | 44 |
| 32 | 3 | 74 | 17 | 116 | 45 |
| 33 | 3 | 75 | 17 | 117 | 46 |
| 34 | 3 | 76 | 18 | 118 | 47 |
| 35 | 3 | 77 | 18 | 119 | 48 |
| 36 | 3 | 78 | 19 | 120 | 49 |
| 37 | 4 | 79 | 19 | 121 | 49 |
| 38 | 4 | 80 | 20 | 122 | 50 |
| 39 | 4 | 81 | 20 | 123 | 51 |
| 40 | 4 | 82 | 21 | 124 | 52 |
| 41 | 5 | 83 | 22 | 125 | 53 |
| 42 | 5 | 84 | 22 | 126 | 54 |
| 127 | 55 | 169 | 103 | 211 | 168 |
| 128 | 56 | 170 | 105 | 212 | 170 |
| 129 | 57 | 171 | 106 | 213 | 172 |
| 130 | 58 | 172 | 107 | 214 | 173 |
| 131 | 59 | 173 | 109 | 215 | 175 |
| 132 | 60 | 174 | 110 | 216 | 177 |
| 133 | 61 | 175 | 111 | 217 | 179 |
| 134 | 62 | 176 | 113 | 218 | 181 |
| 135 | 63 | 177 | 114 | 219 | 182 |
| 136 | 64 | 178 | 116 | 220 | 184 |
| 137 | 65 | 179 | 117 | 221 | 186 |
| 138 | 66 | 180 | 119 | 222 | 188 |
| 139 | 67 | 181 | 120 | 223 | 190 |
| 140 | 68 | 182 | 121 | 224 | 192 |
| 141 | 69 | 183 | 123 | 225 | 194 |
| 142 | 70 | 184 | 124 | 226 | 196 |
| 143 | 71 | 185 | 126 | 227 | 197 |
| 144 | 73 | 186 | 127 | 228 | 199 |
| 145 | 74 | 187 | 129 | 229 | 201 |
| 146 | 75 | 188 | 130 | 230 | 203 |
| 147 | 76 | 189 | 132 | 231 | 205 |
| 148 | 77 | 190 | 133 | 232 | 207 |
| 149 | 78 | 191 | 135 | 233 | 209 |
| 150 | 79 | 192 | 137 | 234 | 211 |
| 151 | 81 | 193 | 138 | 235 | 213 |
| 152 | 82 | 194 | 140 | 236 | 215 |
| 153 | 83 | 195 | 141 | 237 | 217 |
| 154 | 84 | 196 | 143 | 238 | 219 |
| 155 | 85 | 197 | 145 | 239 | 221 |
| 156 | 87 | 198 | 146 | 240 | 223 |
| 157 | 88 | 199 | 148 | 241 | 225 |
| 158 | 89 | 200 | 149 | 242 | 227 |
| 159 | 90 | 201 | 151 | 243 | 229 |
| 160 | 91 | 202 | 153 | 244 | 231 |
| 161 | 93 | 203 | 154 | 245 | 234 |
| 162 | 94 | 204 | 156 | 246 | 236 |
| 163 | 95 | 205 | 158 | 247 | 238 |
| 164 | 97 | 206 | 159 | 248 | 240 |
| 165 | 98 | 207 | 161 | 249 | 242 |
| 166 | 99 | 208 | 163 | 250 | 244 |
| 167 | 100 | 209 | 165 | 251 | 246 |
| 168 | 102 | 210 | 166 | 252 | 248 |
| | | | | 253 | 251 |
| | | | | 254 | 253 |
| | | | | 255 | 255 |
| | | | | Conventional | |

### APPENDIX A

**Table 2**

| **Look-up Tables for 8-bit Display** | | | | | | | | |
|---|---|---|---|---|---|---|---|---|
| **IN** | **LUT 51 OUT** | **LUT 82 ERROR** | **IN** | **LUT 51 OUT** | **LUT 82 ERROR** | **IN** | **LUT 51 OUT** | **LUT 82 ERROR** |
| 0 | 0 | 0 | 44 | 11 | 0 | 88 | 34 | 0 |
| 1 | 0 | 1 | 45 | 11 | 1 | 89 | 35 | 0 |
| 2 | 0 | 2 | 46 | 12 | 0 | 90 | 35 | 1 |
| 3 | 0 | 3 | 47 | 12 | 1 | 91 | 36 | 0 |
| 4 | 0 | 4 | 48 | 13 | 0 | 92 | 37 | 0 |
| 5 | 0 | 5 | 49 | 13 | 1 | 93 | 37 | 1 |
| 6 | 0 | 6 | 50 | 14 | 0 | 94 | 38 | 0 |
| 7 | 0 | 7 | 51 | 14 | 1 | 95 | 39 | 0 |
| 8 | 0 | 8 | 52 | 15 | 0 | 96 | 40 | 0 |
| 9 | 0 | 9 | 53 | 15 | 1 | 97 | 40 | 1 |
| 10 | 1 | 0 | 54 | 15 | 2 | 98 | 41 | 0 |
| 11 | 1 | 1 | 55 | 16 | 0 | 99 | 42 | 0 |
| 12 | 1 | 2 | 56 | 16 | 1 | 100 | 43 | 0 |
| 13 | 1 | 3 | 57 | 17 | 0 | 101 | 43 | 1 |
| 14 | 1 | 4 | 58 | 17 | 1 | 102 | 44 | 0 |
| 15 | 2 | 0 | 59 | 18 | 0 | 103 | 45 | 0 |
| 16 | 2 | 1 | 60 | 18 | 1 | 104 | 46 | 0 |
| 17 | 2 | 2 | 61 | 19 | 0 | 105 | 46 | 1 |
| 18 | 2 | 3 | 62 | 19 | 1 | 106 | 47 | 0 |
| 19 | 2 | 4 | 63 | 20 | 0 | 107 | 48 | 0 |
| 20 | 3 | 0 | 64 | 20 | 1 | 108 | 49 | 0 |
| 21 | 3 | 1 | 65 | 21 | 0 | 109 | 50 | 0 |
| 22 | 3 | 2 | 66 | 21 | 1 | 110 | 51 | 0 |
| 23 | 3 | 3 - | 67 | 22 | 0 | 111 | 51 | 1 |
| 24 | 4 | 0 | 68 | 22 | 1 | 112 | 52 | 0 |
| 25 | 4 | 1 | 69 | 23 | 0 | 113 | 53 | 0 |
| 26 | 4 | 2 | 70 | 23 | 1 | 114 | 54 | 0 |
| 27 | 4 | 3 | 71 | 24 | 0 | 115 | 55 | 0 |
| 28 | 5 | 0 | 72 | 24 | 1 | 116 | 56 | 0 |
| 29 | 5 | 1 | 73 | 25 | 0 | 117 | 57 | 1 |
| 30 | 5 | 2 | 74 | 25 | 1 | 118 | 57 | 0 |
| 31 | 6 | 0 | 75 | 26 | 0 | 119 | 58 | 0 |
| 32 | 6 | 1 | 76 | 27 | 0 | 120 | 59 | 0 |
| 33 | 6 | 2 | 77 | 27 | 1 | 121 | 60 | 0 |
| 34 | 7 | 0 | 78 | 28 | 0 | 122 | 61 | 0 |
| 35 | 7 | 1 | 79 | 28 | 1 | 123 | 62 | 0 |
| 36 | 7 | 2 | 80 | 29 | 0 | 124 | 63 | 0 |
| 37 | 8 | 0 | 81 | 30 | 0 | 125 | 64 | 0 |
| 38 | 8 | 1 | 82 | 30 | 1 | 126 | 65 | 0 |
| 39 | 8 | 2 | 83 | 31 | 0 | 127 | 66 | 0 |
| 40 | 9 | 0 | 84 | 31 | 1 | 128 | 67 | 0 |
| 41 | 9 | 1 | 85 | 32 | 0 | 129 | 68 | 0 |
| 42 | 10 | 0 | 86 | 33 | 0 | | | |
| 43 | 10 | 1 | 87 | 33 | 1 | | | |
| 130 | 69 | 0 | 173 | 118 | 0 | 216 | 183 | 0 |
| 131 | 70 | 0 | 174 | 119 | 0 | 217 | 184 | 0 |
| 132 | 71 | 0 | 175 | 121 | 0 | 218 | 186 | 0 |
| 133 | 72 | 0 | 176 | 122 | 0 | 219 | 188 | 0 |
| 134 | 73 | 0 | 177 | 124 | 0 | 220 | 190 | 0 |
| 135 | 74 | 0 | 178 | 125 | 0 | 221 | 191 | 0 |
| 136 | 75 | 0 | 179 | 126 | 0 | 222 | 193 | 0 |
| 137 | 76 | 0 | 180 | 128 | 0 | 223 | 195 | 0 |
| 138 | 77 | 0 | 181 | 129 | 0 | 224 | 197 | 0 |
| 139 | 78 | 0 | 182 | 130 | 0 | 225 | 198 | 0 |
| 140 | 79 | 0 | 183 | 132 | 0 | 226 | 200 | 0 |
| 141 | 80 | 0 | 184 | 133 | 0 | 227 | 202 | 0 |
| 142 | 81 | 0 | 185 | 135 | 0 | 228 | 204 | 0 |
| 143 | 82 | 0 | 186 | 136 | 0 | 229 | 205 | 0 |
| 144 | 83 | 0 | 187 | 138 | 0 | 230 | 207 | 0 |
| 145 | 84 | 0 | 188 | 139 | 0 | 231 | 209 | 0 |
| 146 | 85 | 0 | 189 | 140 | 0 | 232 | 211 | 0 |
| 147 | 86 | 0 | 190 | 142 | 0 | 233 | 213 | 0 |
| 148 | 88 | 0 | 191 | 143 | 0 | 234 | 214 | 0 |
| 149 | 89 | 0 | 192 | 145 | 0 | 235 | 216 | 0 |
| 150 | 90 | 0 | 193 | 146 | 0 | 236 | 218 | 0 |
| 151 | 91 | 0 | 194 | 148 | 0 | 237 | 220 | 0 |
| 152 | 92 | 0 | 195 | 149 | 0 | 238 | 222 | 0 |
| 153 | 93 | 0 | 196 | 151 | 0 | 239 | 224 | 0 |
| 154 | 94 | 0 | 197 | 152 | 0 | 240 | 226 | 0 |
| 155 | 96 | 0 | 198 | 154 | 0 | 241 | 228 | 0 |
| 156 | 97 | 0 | 199 | 155 | 0 | 242 | 229 | 0 |
| 157 | 98 | 0 | 200 | 157 | 0 | 243 | 231 | 0 |
| 158 | 99 | 0 | 201 | 158 | 0 | 244 | 233 | 0 |
| 159 | 100 | 0 | 202 | 160 | 0 | 245 | 235 | 0 |
| 160 | 102 | 0 | 203 | 162 | 0 | 246 | 237 | 0 |
| 161 | 103 | 0 | 204 | 163 | 0 | 247 | 239 | 0 |
| 162 | 104 | 0 | 205 | 165 | 0 | 248 | 241 | 0 |
| 163 | 105 | 0 | 206 | 166 | 0 | 249 | 243 | 0 |
| 164 | 107 | 0 | 207 | 168 | 0 | 250 | 245 | 0 |
| 165 | 108 | 0 | 208 | 170 | 0 | 251 | 247 | 0 |
| 166 | 109 | 0 | 209 | 171 | 0 | 252 | 249 | 0 |
| 167 | 110 | 0 | 210 | 173 | 0 | 253 | 251 | 0 |
| 168 | 112 | 0 | 211 | 174 | 0 | 254 | 253 | 0 |
| 169 | 113 | 0 | 212 | 176 | 0 | 255 | 255 | 0 |
| 170 | 114 | 0 | 213 | 178 | 0 | | "TI_Gamma | |
| 171 | 116 | 0 | 214 | 179 | 0 | | | |
| 172 | 117 | 0 | 215 | 181 | 0 | | | |

### APPENDIX A

**Table 3**

| **Look-up Tables for 7-bit Display** | | | | | | | | |
|---|---|---|---|---|---|---|---|---|
| **IN** | **OUT** | **ERROR** | **IN** | **OUT** | **ERROR** | **IN** | **OUT** | **ERROR** |
| 0 | 0 | 0 | 44 | 10 | 2 | 88 | 34 | 0 |
| 1 | 0 | 1 | 45 | 10 | 3 | 89 | 34 | 1 |
| 2 | 0 | 2 | 46 | 12 | 0 | 90 | 34 | 2 |
| 3 | 0 | 3 | 47 | 12 | 1 | 91 | 36 | 0 |
| 4 | 0 | 4 | 48 | 12 | 2 | 92 | 36 | 1 |
| 5 | 0 | 5 | 49 | 12 | 3 | 93 | 36 | 2 |
| 6 | 0 | 6 | 50 | 14 | 0 | 94 | 38 | 0 |
| 7 | 0 | 7 | 51 | 14 | 1 | 95 | 38 | 1 |
| 8 | 0 | 8 | 52 | 14 | 2 | 96 | 40 | 0 |
| 9 | 0 | 9 | 53 | 14 | 3 | 97 | 40 | 1 |
| 10 | 0 | 10 | 54 | 14 | 4 | 98 | 40 | 2 |
| 11 | 0 | 11 | 55 | 16 | 0 | 99 | 42 | 0 |
| 12 | 0 | 12 | 56 | 16 | 1 | 100 | 42 | 1 |
| 13 | 0 | 13 | 57 | 16 | 2 | 101 | 42 | 2 |
| 14 | 0 | 14 | 58 | 16 | 3 | 102 | 44 | 0 |
| 15 | 2 | 0 | 59 | 18 | 0 | 103 | 44 | 1 |
| 16 | 2 | 1 | 60 | 18 | 1 | 104 | 46 | 0 |
| 17 | 2 | 2 | 61 | 18 | 2 | 105 | 46 | 1 |
| 18 | 2 | 3 | 62 | 18 | 3 | 106 | 46 | 2 |
| 19 | 2 | 4 | 63 | 20 | 0 | 107 | 48 | 0 |
| 20 | 2 | 5 | 64 | 20 | 1 | 108 | 48 | 1 |
| 21 | 2 | 6 | 65 | 20 | 2 | 109 | 50 | 0 |
| 22 | 2 | 7 | 66 | 20 | 3 | 110 | 50 | 1 |
| 23 | 2 | 8 | 67 | 22 | 0 | 111 | 50 | 2 |
| 24 | 4 | 0 | 68 | 22 | 1 | 112 | 52 | 0 |
| 25 | 4 | 1 | 69 | 22 | 2 | 113 | 52 | 1 |
| 26 | 4 | 2 | 70 | 22 | 3 | 114 | 54 | 0 |
| 27 | 4 | 3 | 71 | 24 | 0 | 115 | 54 | 1 |
| 28 | 4 | 4 | 72 | 24 | 1 | 116 | 56 | 0 |
| 29 | 4 | 5 | 73 | 24 | 2 | 117 | 56 | 1 |
| 30 | 4 | 6 | 74 | 24 | 3 | 118 | 56 | 2 |
| 31 | 6 | 0 | 75 | 26 | 0 | 119 | 58 | 0 |
| 32 | 6 | 1 | 76 | 26 | 1 | 120 | 58 | 1 |
| 33 | 6 | 2 | 77 | 26 | 2 | 121 | 60 | 0 |
| 34 | 6 | 3 | 78 | 28 | 0 | 122 | 60 | 1 |
| 35 | 6 | 4 | 79 | 28 | 1 | 123 | 62 | 0 |
| 36 | 6 | 5 | 80 | 28 | 2 | 124 | 62 | 1 |
| 37 | 8 | 0 | 81 | 30 | 0 | 125 | 64 | 0 |
| 38 | 8 | 1 | 82 | 30 | 1 | 126 | 64 | 1 |
| 39 | 8 | 2 | 83 | 30 | 2 | 127 | 66 | 0 |
| 40 | 8 | 3 | 84 | 30 | 3 | 128 | 66 | 1 |
| 41 | 8 | 4 | 85 | 32 | 0 | 129 | 68 | 0 |
| 42 | 10 | 0 | 86 | 32 | 1 | | | |
| 43 | 10 | 1 | 87 | 32 | 2 | | | |
| 130 | 68 | 1 | 173 | 118 | 0 | 216 | 182 | 0 |
| 131 | 70 | 0 | 174 | 118 | 1 | 217 | 184 | 0 |
| 132 | 70 | 1 | 175 | 120 | 0 | 218 | 186 | 0 |
| 133 | 72 | 0 | 176 | 122 | 0 | 219 | 188 | 0 |
| 134 | 72 | 1 | 177 | 124 | 0 | 220 | 190 | 0 |
| 135 | 74 | 0 | 178 | 124 | 1 | 221 | 190 | 1 |
| 136 | 74 | 1 | 179 | 126 | 0 | 222 | 192 | 0 |
| 137 | 76 | 0 | 180 | 128 | 0 | 223 | 194 | 0 |
| 138 | 76 | 1 | 181 | 128 | 1 | 224 | 196 | 0 |
| 139 | 78 | 0 | 182 | 130 | 0 | 225 | 198 | 0 |
| 140 | 78 | 1 | 183 | 132 | 0 | 226 | 200 | 0 |
| 141 | 80 | 0 | 184 | 132 | 1 | 227 | 202 | 0 |
| 142 | 80 | 1 | 185 | 134 | 0 | 228 | 204 | 0 |
| 143 | 82 | 0 | 186 | 136 | 0 | 229 | 204 | 1 |
| 144 | 82 | 1 | 187 | 138 | 0 | 230 | 206 | 0 |
| 145 | 84 | 0 | 188 | 138 | 1 | 231 | 208 | 0 |
| 146 | 84 | 1 | 189 | 140 | 0 | 232 | 210 | 0 |
| 147 | 86 | 0 | 190 | 142 | 0 | 233 | 212 | 0 |
| 148 | 88 | 0 | 191 | 142 | 1 | 234 | 214 | 0 |
| 149 | 88 | 1 | 192 | 144 | 0 | 235 | 216 | 0 |
| 150 | 90 | 0 | 193 | 146 | 0 | 236 | 218 | 0 |
| 151 | 90 | 1 | 194 | 148 | 0 | 237 | 220 | 0 |
| 152 | 92 | 0 | 195 | 148 | 1 | 238 | 222 | 0 |
| 153 | 92 | 1 | 196 | 150 | 0 | 239 | 224 | 0 |
| 154 | 94 | 0 | 197 | 152 | 0 | 240 | 226 | 0 |
| 155 | 96 | 0 | 198 | 154 | 0 | 241 | 228 | 0 |
| 156 | 96 | 1 | 199 | 154 | 1 | 242 | 228 | 1 |
| 157 | 98 | 0 | 200 | 156 | 0 | 243 | 230 | 0 |
| 158 | 98 | 1 | 201 | 158 | 0 | 244 | 232 | 0 |
| 159 | 100 | 0 | 202 | 160 | 0 | 245 | 234 | 0 |
| 160 | 102 | 0 | 203 | 162 | 0 | 246 | 236 | 0 |
| 161 | 102 | 1 | 204 | 162 | 1 | 247 | 238 | 0 |
| 162 | 104 | 0 | 205 | 164 | 0 | 248 | 240 | 0 |
| 163 | 104 | 1 | 206 | 166 | 0 | 249 | 242 | 0 |
| 164 | 106 | 0 | 207 | 168 | 0 | 250 | 244 | 0 |
| 165 | 108 | 0 | 208 | 170 | 0 | 251 | 246 | 0 |
| 166 | 108 | 1 | 209 | 170 | 1 | 252 | 248 | 0 |
| 167 | 110 | 0 | 210 | 172 | 0 | 253 | 250 | 0 |
| 168 | 112 | 0 | 211 | 174 | 0 | 254 | 252 | 0 |
| 169 | 112 | 1 | 212 | 176 | 0 | 255 | 254 | 0 |
| 170 | 114 | 0 | 213 | 178 | 0 | "TI_Gamma | | |
| 171 | 116 | 0 | 214 | 178 | 1 | | | |
| 172 | 116 | 1 | 215 | 180 | 0 | | | |

## Claims

1. An error diffusion filter for a DMD display comprising:
an inverse gamma look-up table (51); and
means responsive to an error output value for distributively changing pixel data intensity levels to pixel elements neighbouring a given pixel element of a DMD (19), said changing being in proportion to said error output value; **characterized in that**
said inverse gamma look-up table (51) is responsive to raster scanned, gamma corrected video data for providing a digitised pixel data intensity level to said given pixel element, said digitised intensity level being at the closest achievable pixel data intensity level to an exact inverse gamma intensity level; and
that said error diffusion filter further comprises an error look-up table (82) responsive to said video data for providing said error output value, said error output value corresponding to the difference between said exact inverse gamma intensity level and said closest immediately achievable intensity level for said given pixel element.

2. The error diffusion filter of claim 1 wherein said error look-up table (82) further includes a table providing error values based on location of defective pixel elements and wherein said means for changing pixel data intensity levels includes means responsive to said error values based on location of said defective pixel elements for changing pixel data intensity level to pixel elements surrounding each said defective pixel element to visually adjust for said defective pixel elements.

3. The error diffusion filter of claim 1 or claim 2 wherein said means responsive to error output value, in order to change a neighbouring pixel element, includes means (92) for summing 1/4 of the error from a previous given horizontal pixel data element, 1/4 of the error from a previous given vertical pixel data element, 1/4 of the error from the previous given horizontal pixel data element to said previous vertical pixel data element, and 1/4 of the error from the next given horizontal data element to said previous vertical pixel data element.

4. The error diffusion filter of claim 3 wherein said means (92) for summing includes a line delay (85, 87).

5. The error diffusion filter of any preceding claim wherein there is a separate inverse gamma look-up table and diffusion operation for red, green and blue video data.

6. The error diffusion filter of any preceding claim, wherein the means responsive to error output comprises:
a summer (81) coupled to pixel elements neighbouring said given pixel element and responsive to said error output value for summing said error output value with the pixel data intensity levels for said neighbouring pixel elements to visually achieve said exact inverse gamma intensity level.

7. A method of filtering a DMD display comprising the steps of:
providing a digitised pixel intensity level to each pixel element that is the closest intensity level to an exact inverse gamma intensity level using an inverse gamma look-up table (51);
providing error output value corresponding to the difference between said exact intensity level and the closest achievable intensity level using an error look-up table (82), and
changing the pixel data intensity levels to pixel elements surrounding pixel elements having an error output value, said surrounding pixel elements being changed in proportion to said error output value.

8. A method of correcting for defective pixel elements in a DMD display comprising the steps of:
determining the location of each of said defective pixel elements;
storing error values in a table (82) based on the location of each of said defective pixel elements; and
changing pixel intensity levels of pixel elements surrounding each of said defective pixel elements to visually adjust for the defect.

## Patentansprüche

1. Fehlerdiffusionsfilter für eine DMD-Anzeige, mit:
einer inversen Gamma-Nachschlagtabelle (51); und
Mitteln, die als Antwort auf einen Fehlerausgangswert die Pixeldaten-Intensitätspegel für Pixelelemente, die ein gegebenes Pixelelement einer DMD (19) umgeben, in verteilter Weise ändern, wobei die Änderung in einem Verhältnis zum Fehlerausgangswert steht; **dadurch gekennzeichnet, daß**
die inverse Gamma-Nachschlagtabelle (51) als Antwort auf rasterabgetastete, gammakorrigierte Videodaten für das gegebene Pixelelement einen digitalisierten Pixeldaten-Intensitätspegel angibt, wobei der digitalisierte Intensitätspegel der einem exakten inversen Gamma-Intensitätspegel am nächsten liegende erreichbare Pixeldaten-Intensitätspegel ist; und
das Fehlerdiffusionsfilter ferner eine Fehler-Nachschlagtabelle (82) umfaßt, die als Antwort auf die Videodaten den Fehlerausgangswert angibt, wobei der Fehlerausgangswert der Differenz zwischen dem exakten inversen Gamma-Intensitätspegel und dem nächsten unmittelbar erreichbaren Intensitätspegel für das gegebene Pixelelement entspricht.

2. Fehlerdiffusionsfilter nach Anspruch 1, bei dem die Fehler-Nachschlagtabelle (82) weiterhin eine Tabelle enthält, die Fehlerwerte auf der Grundlage des Ortes fehlerhafter Pixelelemente angibt, und bei dem die Mittel zum Ändern der Pixeldaten-Intensitätspegel Mittel enthalten, die als Antwort auf die Fehlerwerte, die auf dem Ort der fehlerhaften Pixelelemente basieren, Pixeldaten-Intensitätspegel für Pixelelemente, die jedes fehlerhafte Pixelelement umgeben, ändern, um sie visuell an die fehlerhaften Pixelelemente anzugleichen.

3. Fehlerdiffusionsfilter nach Anspruch 1 oder Anspruch 2, bei dem die Mittel, die als Antwort auf den Fehlerausgangswert ein benachbartes Pixelelement ändern, Mittel (92) enthalten, die 1/4 des Fehlers von einem vorhergehenden, gegebenen horizontalen Pixeldatenelement, 1/4 des Fehlers von einem vorhergehenden, gegebenen vertikalen Pixeldatenelement sowie 1/4 des Fehlers von dem vorhergehenden, gegebenen, horizontalen Pixelelement zu dem vorhergehenden, vertikalen Pixeldatenelement und 1/4 des Fehlers von dem nächsten gegebenen horizontalen Datenelement zu dem vorhergehenden vertikalen Pixeldatenelement addieren.

4. Fehlerdiffusionsfilter nach Anspruch 3, bei dem die Additionsmittel (92) eine Verzögerungsleitung (85, 87) enthalten.

5. Fehlerdiffusionsfilter nach einem vorhergehenden Anspruch, bei dem für rote, grüne und blaue Videodaten separate, inverse Gamma-Nachschlagtabellen und separate Diffusionsoperationen vorhanden sind.

6. Fehlerdiffusionsfilter nach einem vorhergehenden Anspruch, bei dem die Mittel, die auf den Fehlerausgang antworten, umfassen:
einen Addierer (81), der mit den das gegebene Pixelelement umgebenden Pixelelementen gekoppelt ist und als Antwort auf den Fehlerausgangswert den Fehlerausgangswert zu den Pixeldaten-Intensitätspegeln für die benachbarten Pixelelemente addiert, um visuell den exakten inversen Gamma-Intensitätspegel zu erzielen.

7. Verfahren zum Filtern einer DMD-Anzeige, das die folgenden Schritte umfaßt:
Bereitstellen eines digitalisierten Pixel-Intensitätspegels für jedes Pixelelement, der der nächstliegende Intensitätspegel für einen exakten inversen Gamma-Intensitätspegel ist, unter Verwendung einer inversen Gamma-Nachschlagtabelle (51);
Bereitstellen eines Fehlerausgangswerts, der der Differenz zwischen dem exakten Intensitätspegel und dem nächstliegenden erreichbaren Intensitätspegel entspricht, unter Verwendung einer Fehler-Nachschlagtabelle (82) und
Ändern der Pixeldaten-Intensitätspegel für Pixelelemente, die Pixelelemente mit einem Fehlerausgangswert umgeben, wobei die umgebenden Pixelelemente im Verhältnis zu dem Fehlerausgangswert geändert werden.

8. Verfahren zum Korrigieren fehlerhafter Pixelelemente in einer DMD-Anzeige, das die folgenden Schritte umfaßt:
Bestimmen des Ortes jedes der fehlerhaften Pixelelemente;
Speichern von Fehlerwerten in einer Tabelle (82) auf der Grundlage des Ortes jedes der fehlerhaften Pixelelemente; und
Ändern der Pixel-Intensitätspegel von Pixelelementen, die jedes der fehlerhaften Pixelelemente umgeben, um sie an den Fehler visuell anzugleichen.

## Revendications

1. Filtre de diffusion d'erreur pour un dispositif d'affichage DMD comprenant :
une table de consultation de gamma inverse (51) ; et
des moyens aptes à répondre à une valeur de sortie d'erreur pour modifier de façon distributive des niveaux d'intensité de données de pixels à des éléments de pixels voisins d'un élément de pixel donné d'un dispositif DMD (19), ladite modification étant proportionnelle à ladite valeur de sortie d'erreur;
**caractérisé en ce que** ladite table de consultation de gamma inverse (51) est apte à répondre à des données vidéo explorées selon un balayage de trame et ayant subi une correction de gamma, pour délivrer un niveau numérisé d'intensité de données de pixels audit élément de pixel donné, ledit niveau numérisé d'intensité étant le niveau d'intensité de données de pixels le plus proche pouvant être obtenu par rapport à un niveau d'intensité précis de gamma inverse; et
que ledit filtre de diffusion d'erreur comporte en outre une table de consultation d'erreurs (82) apte à répondre auxdites données vidéo pour délivrer ladite valeur de sortie d'erreur, ladite valeur de sortie d'erreur correspondant à la différence entre ledit niveau d'intensité de gamma inverse précis et ledit niveau d'intensité le plus proche pouvant être obtenu immédiatement pour ledit élément de pixel donné.

2. Filtre de diffusion d'erreur selon la revendication 1, dans lequel ladite table de consultation d'erreur (82) comprend en outre une table fournissant des valeurs d'erreurs basées sur l'emplacement d'éléments de pixels défectueux et dans lequel lesdits moyens de modification de niveaux d'intensité de données de pixels incluent des moyens aptes à répondre auxdites valeurs d'erreurs sur la l'emplacement desdits éléments de pixels défectueux pour modifier le niveau d'intensité de données de pixels sur des éléments de pixels entourant chacun desdits éléments de pixels défectueux pour réaliser un ajustement visuel desdits éléments de pixels défectueux.

3. Filtre de diffusion d'erreurs selon la revendication 1 ou la revendication 2, dans lequel lesdits moyens sensibles à la valeur de sortie d'erreur incluent, pour modifier un élément de pixel voisin, des moyens (92) pour faire la sommation de 1/4 de l'erreur provenant d'un élément de données de pixel horizontal donné précédent, de 1/4 de l'erreur provenant d'un élément de données de pixel vertical donné; de 1/4 de l'erreur entre l'élément de données de pixel horizontal précédent et ledit élément de données de pixel vertical précédent, et de 1/4 de l'erreur entre l'élément de données horizontal donné suivant et ledit élément de données de pixels vertical précédent.

4. Filtre de diffusion d'erreur selon la revendication 3, dans lequel lesdits moyens (92) de sommation incluent un retard de ligne (85,87).

5. Filtre de diffusion d'erreur selon l'une quelconque des revendications précédentes, dans lequel il est prévu une table de consultation de gamma inverse séparée et une opération de diffusion pour les données vidéo rouge, verte et bleue.

6. Filtre de diffusion d'erreur selon l'une quelconque des revendications précédentes, dans lequel les moyens sensibles à une sortie d'erreur comprennent :
un dispositif de sommation (81) couplé à des éléments de pixels voisins dudit élément de pixel donné et apte à répondre à ladite valeur de sortie d'erreur pour réaliser la sommation de ladite valeur de sortie d'erreur et des niveaux d'intensité de données de pixels pour lesdits éléments de pixels voisins pour obtenir visuellement ledit niveau d'intensité de gamma inverse précis.

7. Procédé pour filtrer un dispositif d'affichage DMD comprenant les étapes consistant à :
appliquer un niveau d'intensité de pixel numérisé à chaque élément de pixel qui possède le niveau d'intensité le plus proche d'un niveau d'intensité de gamma inverse précis en utilisant une table de consultation de gamma inverse (51) ;
produire une valeur de sortie d'erreur correspondant à la différence entre ledit niveau d'intensité précis et le niveau d'intensité le plus proche pouvant être obtenu, en utilisant une table de consultation d'erreurs (82) ; et
modifier les niveaux d'intensité de données de pixels pour les appliquer à des éléments de pixels entourant des éléments de pixels présentant une valeur de sortie d'erreur, lesdits éléments de pixels disposés alentour étant modifiés d'une manière proportionnelle à ladite valeur de sortie d'erreur.

8. Procédé pour corriger des éléments de pixels défectueux dans un dispositif d'affichage DMD, comprenant les étapes consistant à :
déterminer l'emplacement de chacun desdits éléments de pixels défectueux;
mémoriser les valeurs d'erreurs dans une table (82) sur la base de l'emplacement de chacun desdits éléments de pixels défectueux; et
modifier les niveaux d'intensité de pixels d'éléments de pixels entourant chacun desdits éléments de pixels défectueux pour ajuster visuellement le défaut.
